Europäisches Patentamt

(19) European Patent Office

Office européen des brevets

(11) Veröffentlichungsnummer: **0 304 399 B1**

(12) # EUROPÄISCHE PATENTSCHRIFT

(45) Veröffentlichungstag der Patentschrift:
**04.12.91 Patentblatt 91/49**

(51) Int. Cl.$^5$: **C09C 1/00**, C09C 1/02,
C09C 1/04, C09C 3/04,
C09C 3/06

(21) Anmeldenummer: **88810543.4**

(22) Anmeldetag: **10.08.88**

(54) Verfahren zur Herstellung von Wismuthvanadaten.

(30) Priorität: **19.08.87 US 87077**

(43) Veröffentlichungstag der Anmeldung:
**22.02.89 Patentblatt 89/08**

(45) Bekanntmachung des Hinweises auf die
Patenterteilung:
**04.12.91 Patentblatt 91/49**

(84) Benannte Vertragsstaaten:
**BE CH DE ES FR GB IT LI NL**

(56) Entgegenhaltungen:
**FR-A- 2 438 074**

(73) Patentinhaber: **CIBA-GEIGY AG**
**Klybeckstrasse 141**
**CH-4002 Basel (CH)**

(72) Erfinder: **Sullivan, Robert M.**
**52 South Wade Avenue**
**Washington, PA 15301 (US)**

EP 0 304 399 B1

## Beschreibung

Wismuthvanadate sind als gelbe Pigmente zum Einfärben von Kunststoffen und Anstrichstoffen bekannt (siehe US-Patentschriften Nr. 4115141 und 4115142).

Zu ihrer Herstellung sowie deren verwandten Verbindungen sind verschiedene Ausfällungsreaktionen sowie Reaktionen im festen Zustand vorgeschlagen worden. Bereits vor der Entdeckung, dass Wismuthvanadate Pigmenteigenschaften besitzen, haben Gottlieb et al. [in Thermal Analysis, Proceedings Fourth ICTA, Budapest 1, SS. 675-679 (1974)] ein Herstellungsverfahren in fester Phase vorgeschlagen, wonach Wismuthoxid und Vanadiumoxid innig vermischt und dann bei 180°C während 16 Stunden thermisch behandelt werden. In diesem Dokument sind auch Ausfällungsmethoden ausgehend von Natriumvanadat- und Wismuthnitrat-Lösungen bei kontrollierten Konzentrationen, Temperaturen, Zeit und pH beschrieben. Auch Roth et al. in American Mineral, Vol. 48, SS. 1348-1356 (1963) beschreiben ein Verfahren in fester Phase durch Wärmebehandlung der gemischten Oxide.

In den oben aufgeführten US-Patenten wird zuerst eine gelartige, aus löslichen Wismuth- und Vanadium-Verbindungen ausgefällte Vorstufe vorbereitet, welche dann in eine kristalline, pigmentäre Form entweder durch Hitzebehandlung zwischen 200-500°C oder durch wässrige Nachbehandlung unter spezifischen Bedingungen übergeführt wird.

Alternativ-Verfahren sind in den Deutschen Offenlegungsschriften Nr. 3315850 und 3315851 und in den US-Patentschriften Nr. 3843554 und 4063956 beschrieben. In der US-Patentschrift Nr. 4316746 sind ausserdem Wismuthvanadat/-molybdat- und Wismuthvanadat/-wolframat-Pigmente beschrieben, die im Falle von Wismuthvanadat/-molybdat aus einer kristallinen Phase mit scheelitartiger Struktur bestehen, während im Falle von Wismuthvanadat/-wolframat ein zweiphasiges Produkt vorliegt.

In der US-Patentschrift Nr. 4455174 und in der DE-Offenlegungsschrift Nr. 3221338 wurde ausserdem als weiteres gelbes Alternativpigment ein Wismuthvanadat/-molybdat bzw. Wismuthvanadat/-wolframat vorgeschlagen. Dabei handelt es sich um mehrphasige Produkte, die aus einer Wismuthvanadat-Phase und einer Wismuthmolybdat- und/oder einer Wismuthwolframat-Phase bestehen. Diese Produkte werden aus einer Lösung enthaltend ein Wimsuth-, ein Vanadat- und ein Molybdatsalz durch Ansäuern und anschliessende Behandlung mit einer alkalischen Lösung enthaltend gegebenenfalls die Wolframatverbindung gewonnen, worauf das entstandene feste Produkt isoliert, gewaschen, gegebenenfalls getrocknet und zwischen 300-800°C thermisch behandelt wird.

In der US-Patentschrift Nr. 4251283 sind schliesslich grünstichig gelbe Wismuthvanadat-Pigmente enthaltend Ca, Ba, Mg oder Zn beschrieben. Sie werden durch Calzinierung eines Gemisches aus $BiPO_4$, $V_2O_5$ und einem Oxid der Formel MeO, worin Me Ca, Ba, Mg oder Zn bedeutet, in Gegenwart von Luft bei einer Temperatur von 500-800°C hergestellt.

In der nicht vorpublizierten EP-A-0271813, in welcher die Vertragsstaaten CH, DE, FR, GB, IT und LI benannt sind, wird ein Verfahren zur Herstellung von temperaturstabilen Wismuthvanadat/molybdat Pigmenten beschrieben, bei dem ein durch Calzinierung erhaltenes Pigment der Formel $BiVO_4 \cdot nBi_2M_0O_6$, in der n = 0,2-2,5 ist, in wässriger Suspension bei Temperaturen von 70-100°C bei pH 4 bis 8,5 mit einer Alkalimetallsilikatlösung oder bei pH 5,5 bis 9,5 mit einer Magnesiumhexafluorosilikatlösung oder bei pH 4,5 bis 9,5 mit einem Gemisch dieser zwei Silikate behandelt wird.

Die obengenannten Verfahren weisen jedoch gewisse Nachteile auf. Ein wesentlicher Nachteil des im festen Zustand durchgeführten Verfahrens liegt darin, dass die calzinierte Masse oft eine trübe gelb-braune oder schmutzige grüne Farbe aufweist, was die Verwendung derartiger Produkte in Pigmentapplikationen merklich beeinträchtigt. Obwohl zur Herabsetzung dieses färberischen Effektes in bestimmten Verfahren des Standes der Technik Oxidationsmittel mitverwendet werden, verursachen viele dieser Mittel die Produktion schädlicher Abgase. Ein weiterer Nachteil einiger dieser Verfahren liegt darin, dass mehrere Verfahrensstufen nötig sind, wie Ausfällung, Calzinierung, u.s.w.

Eine der wichtigsten Aufgaben der Erfindung bestand daher darin, ein im festen Zustand durchgeführtes Verfahren für die Herstellung von Wismuthvanadaten pigmentärer Qualität praktisch unter vollständiger Eliminierung der unerwünschten obigen Farbeffekte zu entwickeln.

Es wurde nun gefunden, dass durch Nassmahlung der calzinierten Wismuthvanadatverbindungen in Gegenwart eines alkalischen Materials oder durch Nassmahlung und anschliessende alkalische Behandlung dieser Verbindungen die Nachteile der bekannten Verfahren im wesentlichen eliminiert werden können. Es wird vermutet, dass die obigen unerwünschten Farbeffekte auf die Anwesenheit vom oft im Ueberschuss eingesetzten Vanadium (zur Sicherstellung einer vollständigen Umsetzung des Wismuths) und/oder auf die Anwesenheit von drei- und vierwertigem Vanadium zurückzuführen ist.

Das vorliegende Verfahren bezweckt damit, diese Verunreinigungen in eine löslische und leicht entfernbare Alkalivanadat-Form überzuführen und damit den gewünschten Farbton zu erhalten. Das Verfahren erlaubt

2

ferner der Einsatz billiger Rohmaterialien sowie eine relativ einfache Arbeitsweise, insbesondere mit der kombinierten alkalischen Nass-Mahlstufe. Ferner ist das Verfahren zur Herstellung einer Vielfalt von Wismuthvanadatverbindungen, einschliesslich von Wismuthvanadat und Wismuthvanadaten enthaltend eine grosse Auswahl von Wismuth- und Vanadium-Ersatzionen, anwendbar. Schliesslich ermöglicht dieses Verfahren die Herstellung von hellen gelben pigmentären Wismuthvanadatverbindungen.

Gegenstand der Erfindung ist demnach ein Verfahren zur Herstellung von Wismuthvanadat und Wismuthvanadat enthaltenden Verbindungen, wonach die Ausgangsprodukte bei hohen Temperaturen calziniert und die so erhaltenen calzinierten Produkte nachbehandelt werden, dadurch gekennzeichnet, dass bei der Nachbehandlungsstufe das calzinierte Produkt nassgemahlen und mit so viel alkalischem Material behandelt wird, dass der pH-Wert der Pigmentsuspension 7,0-13,0 beträgt, wobei die Nassmahlung des calzinierten Produktes entweder in Gegenwart des alkalischen Materials oder vor der Behandlung mit dem gesagten alkalischen Material durchgeführt wird.

Bei den erfindungsgemäss in Frage kommenden Wismuthvanadatverbindungen handelt es sich z.B. um Wismuthvanadat und einphasige Wismuthvanadatverbindungen, welche durch Einbau verschiedener Vorläufer oder verschiedener Verbindungen der Formel $ADO_4$ in das Wismuthvanadat entstehen.

In dieser Formel bedeuten A ein dreiwertiges Wismuth-Kation oder Kationen-Kombinationen aus Wismuth und mindestens einem anderen Kation, und D ein fünfwertiges Vanadiumkation oder Kationen-Kombinationen aus Vanadium und mindestens einem anderen, von A verschiedenen Kation, wobei mindestens A oder D eine Kationen-Kombination darstellt. Diese Kationen sind mit den pigmentären Eigenschaften der resultierenden Produkte verträglich.

Typische Ersatzkationen für Wismuth sind z.B. Erdalkalimetalle und Zink, und typische Ersatzkationen für Vanadium sind z.B. Molybdän und Wolfram.

Beispiele für derartige Wismuthvanadatverbindungen entsprechen der folgenden Formel

$$(Bi, E) (V, G)O_4,$$

worin E ein Erdalkalimetall, Zn oder Gemische davon, und G Mo, W oder Gemische davon bedeuten, wobei das Molverhältnis E zu Bi zwischen 0,1 und 0,4 und das Molverhältnis G zu V zwischen 0 und 0,4 liegen. Die Schreibweise (Bi, E) und (V, G) ist so zu verstehen, dass das Wismuth teilweise durch ein oder mehrere Kationen E und das Vanadium teilweise durch ein oder mehrere Kationen G ersetzt werden. Derartige Verbindungen sind in der europäischen Patentanmeldung Nr. 0239526 beschrieben.

Die Vor-Calzinierungs- und Calzinierungs-Stufen sind dem Fachmann gut bekannt und z.B. in den oben als Stand der Technik aufgeführten Referenzen beschrieben. Dabei handelt es sich um im festen Zustand und bei hohen Temperaturen durchgeführte Verfahren ausgehend von den entsprechenden Metalloxiden.

Die gebräuchliche Methode besteht darin, dass Oxidgemische oder Salze, die durch thermische Zersetzung die entsprechenden Oxide liefern (z.B. Carbonate, Nitrate, Oxalate, Hydroxide), in erfindungsgemäss passenden Verhältnissen calziniert werden. Die Calzinierungstemperaturen variieren zwischen etwa 300 und 950°C, wobei die optimale Temperatur von der herzustellenden Zusammensetzung abhängt. Höhere Temperaturen erleichtern die Reaktion und garantieren die Bildung eines homogenen Produktes. Die obere Grenze für die Calzinierungstemperaturen ist aber durch die Bildung einer flüssigen Phase begrenzt.

Die Calzinierungszeit ist nicht kritisch ; Zeiten zwischen 1 und 100 Stunden können verwendet werden, Zeiten zwischen 4 und 48 Stunden sind jedoch bevorzugt. Längere Zeiten sind bei tiefen Temperaturen nötig. Die Calzinierungszeiten können reduziert werden, und die Homogenität der Produkte kann durch Mahlung zwischen den Heizperioden verbessert werden.

Zur erfindungsgemässen Nassmahlung in Gegenwart von alkalischem Material wird das calzinierte Produkt zuerst ausgeladen und auf Raumtemperatur abgekühlt. Die Nassmahlung wird im allgemeinen in einer Kieselstein-, Kugel-, Mikrokugel- oder Sandmühle während genügender Zeit gemahlen, bis eine pigmentäre Partikelgrösse gewonnen wird. Das alkalische Material wird als wässrige Lösung dem Nassmahlungsmilieu zugegeben. Dieses Material wird im allgemeinen am Anfang der Mahlung eingeführt. Es kann aber auch während der Mahlung als Lösung zugegeben werden, so dass dieses Material zur Bildung des Alkalivanadates genügend lange in Berührung mit dem calzinierten Material kommt.

Ein mögliches aber weniger bevorzugtes Alternativ-Verfahren besteht darin, dass das gemahlene Material dann mit einer alkalischen Lösung bei Raumtemperatur behandelt wird, und zwar so lange bis sich das lösliche Salz gebildet hat.

Geeignete alkalische Materialien sind z.B. Alkalimetall-Hydroxide und -Carbonate, bevorzugt Natrium- und Kalium-derivate, sowie Erdalkalimetall-Hydroxide, -Carbonate und -Oxide, bevorzugt Magnesiumderivate. Die alkalischen Materialien werden der Pigmentsuspension in genügender Menge zugegeben, so dass der pH-Wert zwischen etwa 7,0 und 13,0, vorzugsweise aber zwischen 9,5 und 12,0, liegt.

Die erhaltenen Produkte werden dann nach bekannten Verfahren abfiltriert, zur Entfernung löslicher Salze gewaschen und z.B. bei 100-110°C getrocknet. Eine anschliessende Trockenmahlung kann gegebenenfalls auch durchgeführt werden.

Die erhaltenen Wismuthvanadatverbindungen weisen pigmentäre Eigenschaften hoher Qualität, insbesondere die gewünschte leuchtende gelbe Farbnuance und eine hohe Farbkraft, auf. Sie sind zum Pigmentieren einer Vielzahl von Harzen, Oelen und organischen Polymeren besonders geeignet. Sie können in Lacken, Anstrichstoffe und Drucktinten eingearbeitet werden.

Zur Verbesserung bestimmter Pigmenteigenschaften können die erhaltenen Produkte zusätzlich noch mit texturverbessernden Mitteln behandelt werden, z.B. mit langkettigen aliphatischen Alkoholen, Estern, Säuren oder Salzen davon, Aminen, Amiden, Wachsen oder Substanzen, wie Abietinsäure, deren Hydrierungsprodukte, Estern oder Salzen, ferner mit nichtionogenen, anionischen oder kationischen oberflächenaktiven Mitteln.

Die folgenden Beispiele illustrieren den vorliegenden Erfindungsgegenstand weiter. In den nachfolgenden Beispielen bedeuten die Prozente Gewichtsprozente, sofern nichts anderes angegeben ist.

### Beispiel 1 :

46,6 g Wismuthoxid und 18,2 g Vanadiumpentoxid werden nassgemahlen, getrocknet und während 4 Stunden bei 778°C erhitzt. Das resultierende calzinierte Material wird dann in einer Kieselsteinmühle zusammen mit genügendem Natriumhydroxid (als Lösung) gemahlen, dass das Milieu einen pH-Wert von 9,5 aufweist. Die Mahlung wird so lange durchgeführt, bis Partikel pigmentärer Grösse erhalten werden. Das erhaltene Produkt wird dann gewaschen und getrocknet und weist eine helle, gelbe Farbe aus.

Die Pigmenteigenschaften dieses Produktes werden in einer Acryllack-Anreibung geprüft, und die so erhaltenen Ausfärbungen mit einem Kolorimeter gemessen. In jedem Versuch wird aus 22,8 Teilen trockenen Pigmentes und 100 Teilen eines Acryllackes eine Lackanreibung (im folgenden als Vollton bezeichnet), die dann als Film ausgezogen wird. Zur Messung der Farbstärke werden zudem 11,4 Teile pigment und 11,4 Teile pigmentäres Titandioxid gemischt, das erhaltene Gemisch wird dann zu einer Lackanreibung wie oben verarbeitet (= Weissverschnitt) und ausgezogen. Mit den erhaltenen Filmen werden koloristische Farbmessungen durchgeführt. Die Resultate sind nachstehend illustriert : "L" bedeutet Helligkeit, "a" das Verhältnis rot zu grün, wobei " + a" röter und "– a" grüner bedeutet, und "b" bedeutet das Verhältnis gelb zu blau, wobei " + b" gelber und " – b" blauer bedeuten.

|   | Vollton | Weissverschnitt |
|---|---------|-----------------|
| L | 82,2 | 88,3 |
| a | – 8,6 | –11,0 |
| b | +50,1 | +42,9 |

Diese Daten illustrieren die hohe pigmentäre Qualität des erhaltenen Pigmentes.

### Beispiel 2b-2d :

Die folgenden Pigmente werden nach den in Beispiel 1 angegebenen Verfahrensbedindungen hergestellt:

| Eingesetzte Teile (in g): | | | |
|---|---|---|---|
| | Bsp. 2b | Bsp. 2c | Bsp. 2d |
| Wismuthsubnitrat (basisches Wismuthnitrat) | 40,15 | – | – |
| Wismuthoxid | – | 46,6 | 46,6 |
| Vanadiumpentoxid | 9,10 | 18,2 | 18,2 |
| Molybdänoxid | 3,7 | 7,5 | 3,75 |
| Calzinierungstemperatur (°C) | 667 | 778 | 778 |
| Calzinierungszeit (Stunden) | 4 | 4 | 4 |
| pH-Wert | 9,5 | 9,5 | 9,5 |
| Farbe des erhaltenen Pigmentes | hellgelb | hellgelb | hellgelb |

## Patentansprüche

### Patentansprüche für die folgende Vertragsstaaten : BE, ES und NL

1. Verfahren zur Herstellung von Wismuthvanadat und Wismuthvanadat enthaltenden Verbindungen, wonach die Ausgangsprodukte bei hohen Temperaturen calziniert und die so erhaltenen calzinierten Produkte nachbehandelt werden, dadurch gekennzeichnet, dass bei der Nachbehandlungsstufe das calzinierte Produkt nassgemahlen und mit so viel alkalischem Material behandelt wird, dass der pH-Wert der Pigmentsuspension 7,0-13,0 beträgt, wobei die Nassmahlung des calzinierten Produktes entweder in Gegenwart des alkalischen Materials oder vor der Behandlung mit dem gesagten alkalischen Material durchgeführt wird.

2. Verfahren gemäss Anspruch 1, wonach man Wismuthvanadat herstellt.

3. Verfahren gemäss Anspruch 1, wonach man Wismuthvanadat enthaltende Verbindungen herstellt, wobei diese Verbindungen der Formel $ADO_4$ entsprechen, worin A dreiwertiges Wismuth oder eine Kationen-Kombination aus Wismuth und mindestens einem anderen Kation, und D fünfwertiges Vanadium oder eine Kationen-Kombination aus Vanadium und mindestens einem anderen, von A verschiedenen Kation bedeuten, und mindestens A oder D eine Kationen-Kombination darstellt.

4. Verfahren gemäss Anspruch 3, wobei A ein Erdalkalimetall und D Molybdän oder Wolfram sind.

5. Verfahren gemäss Anspruch 3, wobei die Wismuthvanadat enthaltenden Verbindungen der Formel

$$(Bi, E) (V, G)O_4$$

entsprechen, worin E ein Erdalkalimetall, Zink oder Gemische davon, und G Molybdän, Wolfram oder Gemische davon sind, wobei das Molverhältnis E zu Bi zwischen 0,1 und 0,4 und das Molverhältnis G zu V zwischen 0 und 0,4 liegen.

6. Verfahren gemäss Anspruch 1, wonach das calzinierte Produkt in Gegenwart des alkalischen Materials nassgemahlen wird.

7. Verfahren gemäss Anspruch 1, wobei das alkalische Material ein Alkalimetallhydroxid, ein Alkalimetallcarbonat, ein Erdalkalimetallhydroxid, ein Erdalkalimetallcarbonat oder ein Erdalkalimetalloxid ist

8. Verfahren gemäss Anspruch 7, wobei das alkalische Material ein Alkalimetallhydroxid ist.

9. Verfahren gemäss Anspruch 6, wonach der pH-Bereich zwischen 9,5 und 12 liegt.

### Patentansprüche für die folgende Vertragsstaaten CH, DE, FR, GB, IT und LI

1. Verfahren zur Herstellung von Wismuthvanadat und Wismuthvanadat enthaltenden Verbindungen, wonach die Ausgangsprodukte bei hohen Temperaturen calziniert und die so erhaltenen calzinierten Produkte nachbehandelt werden, dadurch gekennzeichnet, dass bei der Nachbehandlungsstufe das calzinierte Produkt nassgemahlen und mit so viel alkalischem Material behandelt wird, dass der pH-Wert der Pigmentsuspension 7,0-13,0 beträgt, wobei die Nassmahlung des calzinierten Produktes entweder in Gegenwart des alkalischen Materials oder vor der Behandlung mit dem gesagten alkalischen Material durchgeführt wird, mit der Massgabe, dass bei Produkten der Formel $BiVO_4 \cdot nBi_2M_0O_6$ mit n = 0,2 bis 2,5 in wässriger Suspension bei Temperaturen von 70-100°C und im pH-Bereich von nicht grösser als 9,5 die Nachbehandlungsstufe nicht in Gegenwart einer Alkalimetallsilikatlösung oder einer Magnesiumhexafluorosilikatlösung durchgeführt wird.

2. Verfahren gemäss Anspruch 1, wonach man Wismuthvanadat herstellt.

3. Verfahren gemäss Anspruch 1, wonach man Wismuthvanadat enthaltende Verbindungen herstellt, wobei diese Verbindungen der Formel $ADO_4$ entsprechen, worin A dreiwertiges Wismuth oder eine Kationen-Kombination aus Wismuth und mindestens einem anderen Kation, und D fünfwertiges Vanadium oder eine Kationen-Kombination aus Vanadium und mindestens einem anderen, von A verschiedenen Kation bedeuten, und mindestens A oder D eine Kationen-Kombination darstellt.

4. Verfahren gemäss Anspruch 3, wobei A ein Erdalkalimetall und D Molybdän oder Wolfram sind.

5. Verfahren gemäss Anspruch 3, wobei die Wismuthvanadat enthaltenden Verbindungen der Formel

$$(Bi, E) (V, G)O_4$$

entsprechen, worin E ein Erdalkalimetall, Zink oder Gemische davon, und G Molybdän, Wolfram oder Gemische davon sind, wobei das Molverhältnis E zu Bi zwischen 0,1 und 0,4 und das Molverhältnis G zu V zwischen 0 und 0,4 liegen.

6. Verfahren gemäss Anspruch 1, wonach das calzinierte Produkt in Gegenwart des alkalischen Materials nassgemahlen wird.

7. Verfahren gemäss Anspruch 1, wobei das alkalische Material ein Alkalimetallhydroxid, ein Alkalimetallcarbonat, ein Erdalkalimetallhydroxid, ein Erdalkalimetallcarbonat oder ein Erdalkalimetalloxid ist.

8. Verfahren gemäss Anspruch 7, wobei das alkalische Material ein Alkalimetallhydroxid ist.

9. Verfahren gemäss Anspruch 6, wonach der pH-Bereich zwischen 9,5 und 12 liegt.

## Claims

**Claims for the following Contracting States : BE, ES and NL**

1. A process for the preparation of bismuth vanadate and bismuth vanadate-containing compounds whereby the starting products are calcined at elevated temperatures and the calcined products thus obtained are subjected to an aftertreatment, wherein the aftertreatment step consists in wet-grinding the calcined product and treating it with sufficient alkaline material to provide a pH of 7.0-13.0 in the pigment suspension, with the wet-grinding of the calcined product being conducted either in the presence of the alkaline material or prior to the treatment with the said alkaline material.

2. A process according to claim 1, wherein bismuth vanadate is prepared.

3. A process according to claim 1, wherein bismuth vanadate-containing compounds are prepared, these compounds corresponding to the formula $ADO_4$ in which A is trivalent bismuth or a cation combination of bismuth and at least one other cation, and D is pentavalent vanadium or a cation combination of vanadium and at least one other cation different from A and at least A or D is a cation combination.

4. A process according to claim 3, wherein A is an alkaline earth metal and D is molybdenum or tungsten.

5. A process according to claim 3, wherein the bismuth vanadate-containing compounds correspond to the formula

$$(Bi, E) (V, G)O_4$$

in which E is an alkaline earth metal, zinc or mixtures thereof, and G is molybdenum, tungsten, or mixtures thereof, the molar ratio of E : Bi being between 0.1 and 0.4 and the molar ratio of G : V being between 0 and 0.4.

6. A process according to claim 1, wherein the calcined product is wetground in the presence of the alkaline material.

7. A process according to claim 1, wherein the alkaline material is an alkali metal hydroxide, alkali metal carbonate, alkaline earth metal hydroxide, alkaline earth metal carbonate or alkaline earth metal oxide.

8. A process according to claim 7, wherein the alkaline material is an alkali metal hydroxide.

9. A process according to claim 6, wherein the pH range is between 9.5 and 12.

**Claims for the following Contracting States : CH, DE, FR, GB, IT and LI**

1. A process for the preparation of bismuth vanadate and bismuth vanadate-containing compounds whereby the starting products are calcined at elevated temperatures and the calcined products thus obtained are subjected to an aftertreatment, wherein the aftertreatment step consist in wet-grinding the calcined product and treating it with sufficient alkaline material to provide a pH of 7.0-13.0 in the pigment suspension, with the wet-grinding of the calcined product being conducted either in the presence of the alkaline material or prior to the treatment with the said alkaline material, with the proviso that for products of the formula $BiVO_4 \cdot nBi_2M_0O_6$ where n is 0.2 to 2.5, in aqueous suspension at temperatures of 70-100°C and in a pH range not exceeding 9.5, the aftertreatment step is not conducted in the presence of a solution of an alkali metal silicate or a solution of magnesium hexafluorosilicate.

2. A process according to claim 1, wherein bismuth vanadate is prepared.

3. A process according to claim 1, wherein bismuth vanadate-containing compounds are prepared, these compounds corresponding to the formula $ADO_4$ in which A is trivalent bismuth or a cation combination of bismuth and at least one other cation, and D is pentavalent vanadium or a cation combination of vanadium and at least one other cation different from A and at least A or D is a cation combination.

4. A process according to claim 3, wherein A is an alkaline earth metal and D is molybdenum or tungsten.

5. A process according to claim 3, wherein the bismuth vanadate-containing compounds correspond to the formula

$$(Bi, E) (V, G)O_4$$

in which E is an alkaline earth metal, zinc or mixtures thereof, and G is molybdenum, tungsten, or mixtures thereof, the molar ratio of E : Bi being between 0.1 and 0.4 and the molar ratio of G : V being between 0 and 0.4.

6. A process according to claim 1, wherein the calcined product is wetground in the presence of the alkaline material.

7. A process according to claim 1, wherein the alkaline material is an alkali metal hydroxide, alkali metal carbonate, alkaline earth metal hydroxide, alkaline earth metal carbonate or alkaline earth metal oxide.

8. A process according to claim 7, wherein the alkaline material is an alkali metal hydroxide.

9. A process according to claim 6, wherein the pH range is between 9.5 and 12.

**Revendications**

**Revendications pour les Etats contractants suivants : BE, ES et NL**

1. Procédé de préparation de vanadate de bismuth et de composés comprenant du vanadate de bismuth, suivant lequel on calcine les produits dont on part à de hautes températures puis on traite les produits calcinés, procédé caractérisé en ce que dans le traitement on broie le produit calciné à l'état humide et on le traite avec suffisamment d'une matière alcaline pour que le pH de la suspension pigmentaire soit compris entre 7,0 et 13,0, en effectuant le broyage soit en présence de la matière alcaline soit avant le traitement avec cette matière.

2. Procédé selon la revendication 1, dans lequel on prépare du vanadate de bismuth.

3. Procédé selon la revendication 1, dans lequel on prépare des composés comprenant du vanadate de bismuth, composés de formule $ADO_4$, dont A représente le bismuth trivalent ou un ensemble de cations de bismuth et d'un ou plusieurs autres cations et D le vanadium pentavalent ou un ensemble de cations de vanadium et d'un ou plusieurs autres cations différents de A, au moins A ou D étant un ensemble de cations.

4. Procédé selon la revendication 3, dans lequel A est un métal alcalino-terreux et D le molybdène ou le tungstène.

5. Procédé selon la revendication 3, dans lequel les composés contenant du vanadate de bismuth sont des composés de formule

$$(Bi, E) (V, G)O_4$$

dans laquelle E représente un métal alcalino-terreux ou le zinc ou plusieurs de ces métaux à la fois, et G le molybdène ou le tungstène ou les deux, et le rapport molaire de E à Bi étant compris entre 0,1 et 0,4 et de G à V entre 0 et 0,4.

6. Procédé selon la revendication 1, dans lequel on broie le produit calciné à l'état humide en présence de la matière alcaline.

7. Procédé selon la revendication 1, dans lequel la matière alcaline est un hydroxyde ou un carbonate de métal alcalin ou alcalino-terreux ou un oxyde de métal alcalino-terreux.

8. Procédé selon la revendication 7, dans lequel la matière alcaline est un hydroxyde de métal alcalin.

9. Procédé selon la revendication 6, dans lequel le pH est compris entre 9,5 et 12.

**Revendications pour les Etats contractants suivants : CH, DE, FR, GB, IT et LI**

1. Procédé de préparation de vanadate de bismuth ou de composés contenant du vanadate de bismuth suivant lequel on calcine les produits dont on part à de hautes températures puis on traite les produits calcinés, procédé caractérisé en ce que dans l'opération de traitement on broie le produit calciné à l'état humide et on le traite avec suffisamment d'une matière alcaline pour que le pH de la suspension pigmentaire soit compris entre 7,0 et 13,0, en effectuant le broyage soit en présence de la matière alcaline soit avant le traitement avec cette matière, avec la condition que pour des produits de formule $BiVO_4 \cdot nBi_2M_0O_6$, n étant un nombre de 0,2 à 2,5, l'opération de traitement soit effectuée en suspension aqueuse à des températures de 70 à 100°C et à un pH ne dépassant pas 9,5, en l'absence d'une solution d'un silicate de métal alcalin ou d'hexafluorosilicate de magnésium.

2. Procédé selon la revendication 1, dans lequel on prépare du vanadate de bismuth.

3. Procédé selon la revendication 1, dans lequel on prépare des composés contenant du vanadate de bismuth, composés de formule $ADO_4$, dans laquelle A représente le bismuth trivalent ou un ensemble de cations de bismuth et d'un ou plusieurs autres cations et D le vanadium pentavalent ou un ensemble de cations de vanadium et d'un ou plusieurs autres cations différents de A, au moins A ou D étant un ensemble de cations.

4. Procédé selon la revendication 3, dans lequel A est un métal alcalino-terreux et D le molybdène ou le tungstène.

5. Procédé selon la revendication 3, dans lequel les composés contenant du vanadate de bismuth sont des composés de formule

$$(Bi, E) (V, G)O_4$$

dans laquelle E représente un métal alcalino-terreux ou le zinc ou plusieurs de ces métaux à la fois et G le molybdène ou le tungstène ou les deux, le rapport molaire de E à Bi étant compris entre 0,1 et 0,4 et celui de G à V entre 0 et 0,4.

6. Procédé selon la revendication 1, dans lequel on broie le produit calciné à l'état humide en présence de la matière alcaline.

7. Procédé selon la revendication 1, dans lequel la matière alcaline est un hydroxyde ou un carbonate de métal alcalin ou alcalino-terreux ou un oxyde de métal alcalino-terreux.

8. Procédé selon la revendication 7, dans lequel la matière alcaline est un hydroxyde de métal alcalin.

9. Procédé selon la revendication 6, dans lequel le pH est compris entre 9,5 et 12.